# FASCICULE DE BREVET EUROPEEN

(11) **EP 2 387 522 B1**
(45) Date de publication et mention de la délivrance du brevet: **17.10.2012**
(21) Numéro de dépôt: 10700977.1
(22) Date de dépôt: 12.01.2010
(51) Int. Cl.: B60T 13/58, B60T 8/38, B60T 8/40, B60T 7/06, B60T 11/16, B60T 11/28, B60T 13/12, B60T 13/66, B60T 17/18

(54) **SYSTEME DE FREINAGE ELECTRO-HYDRAULIQUE POUR VEHICULE AUTOMOBILE**
ELEKTROHYDRAULISCHES BREMSSYSTEM FÜR EIN FAHRZEUG
ELECTRO-HYDRAULIC BRAKING SYSTEM FOR AUTOMOBILE

(30) Priorité: 14.01.2009 FR 0900150
(43) Date de publication de la demande: 23.11.2011
(73) Titulaire: Robert Bosch GmbH, 70442 Stuttgart (DE)
(72) Inventeur: BERNADAT, Olivier, F-94170 Le Perreux (FR); AUGUSTE, Antony, F-94350 Villier Sur Marne (FR); GACIC, Bobam, F-93190 Livry Gargan (FR)
(74) Mandataire: Hurwic, Aleksander Wiktor
(86) Numéro de dépôt international: PCT/EP2010/050290
(87) Numéro de publication internationale: WO 2010/081802

(56) Documents cités:
- EP-A- 1 642 795
- WO-A-99/32337
- US-A1- 2007 289 827

## Description

La présente invention concerne un système de freinage électro-hydraulique pour véhicule automobile.

Les véhicules automobiles sont équipés d'une commande de freinage comprenant une pédale de frein agissant sur un maître cylindre, qui transmet une pression hydraulique à un circuit hydraulique de freinage relié à des freins de roues. Un servomoteur pneumatique d'assistance au freinage est monté entre la pédale et le maître-cylindre et amplifie l'effort transmis au maître cylindre.

On obtient ainsi, selon un unique mode de fonctionnement, un couple de freinage des roues qui dépend directement de la force exercée sur la pédale de frein.

Des systèmes de freinage en outre munis d'électrovanne de commande sont décrits notamment dans EP 1 642 795 et US 2007/289827A1.

Pour certains véhicules comme des véhicules hybrides, il est intéressant de disposer de deux modes de freinage à partir d'une même pédale de frein. Un premier mode de freinage pour un effort léger sur la pédale de frein, commande une récupération de l'énergie cinétique du véhicule, en produisant un courant électrique. Un deuxième mode pour un effort plus important sur la pédale de frein, met de plus en oeuvre les freins des roues.

Une unité de commande de freinage ou « Brake Opération Unit » en terminologie anglo-saxonne, comporte un maître-cylindre actionné par la pédale de frein et qui agit sur un capteur détectant l'effort exercé sur la pédale de frein, pour envoyer un signal électrique de commande à un groupe hydraulique régulant la pression de freinage appliquée aux différents freins de roues.

Dans un état de fonctionnement normal, le maître-cylindre n'est pas relié au circuit hydraulique de freinage, des électrovannes d'alimentation de ce circuit étant fermées. L'unité de commande de freinage délivre uniquement un signal électrique, qui est destiné à gérer les deux modes successifs du freinage par la pédale de frein.

Dans cet état de fonctionnement normal, une cartouche hydraulique de l'unité de commande de freinage est alimentée par le maître-cylindre et, en réponse à l'effort exercé par le conducteur sur la pédale de frein, applique à cette pédale un retour d'effort qui s'oppose à l'effort de freinage.

Le retour d'effort dépend du couple de freinage exercé sur les roues et donne au conducteur une sensation lui permettant de mieux contrôler le freinage du véhicule.

Pour assurer la sécurité en cas de défaillance des moyens de freinage pilotés par le signal électrique, on prévoit un deuxième état de fonctionnement où ce signal électrique n'est plus utilisé. Dans ce cas, les électrovannes d'alimentation du circuit hydraulique sont ouvertes et le maître-cylindre agit directement par ce circuit sur les différents freins de roues.

Un problème qui se pose est que la cartouche hydraulique générant le retour d'effort, utilise une partie du volume de fluide délivré par le maître-cylindre, ce qui rallonge la course de la pédale de frein. La pédale de frein s'enfonce davantage au freinage, ce qui peut donner au conducteur l'impression désagréable que le véhicule freine mal.

L'invention a notamment pour but de réaliser une unité de commande de freinage, permettant une réduction de la course de pédale dans un mode de fonctionnement activé en cas de défaillance.

Elle propose à cet effet un système de freinage pour véhicule automobile, comportant une pédale de frein agissant sur un maître-cylindre d'une unité de commande de freinage, qui fournit dans un premier mode de fonctionnement un signal électrique à un groupe hydraulique régulant une pression de freinage sur des freins de roues, le maître-cylindre délivrant dans ce premier mode une pression hydraulique à une cartouche qui applique un retour d'effort à la pédale de frein, le maître-cylindre délivrant dans un deuxième mode de fonctionnement une pression hydraulique aux freins de roues, caractérisé en ce que le circuit d'alimentation de la cartouche de retour d'effort comprend une électrovanne qui ferme ce circuit d'alimentation dans le deuxième mode de fonctionnement et en ce que, dans un mode normal de fonctionnement, un joint d'étanchéité d'un piston du maître-cylindre ferme le circuit d'alimentation de la cartouche de retour d'effort après une course de la pédale de frein.

Un avantage de ce système de freinage est que, dans le deuxième mode de fonctionnement, la cartouche de retour d'effort n'est pas alimentée et ne consomme pas de fluide, ce qui permet de réduire la course des pistons du maître-cylindre et donc de la pédale de frein.

Le système de freinage selon l'invention peut en outre comprendre une ou plusieurs des caractéristiques suivantes, qui peuvent être combinées entre elles :
- le maître-cylindre comporte deux pistons qui alimentent chacun un circuit hydraulique indépendant de commande des freins de roues ;
- des électrovannes sont montées en sortie du maître-cylindre, pour fermer l'alimentation des circuits hydrauliques indépendants ;
- dans un mode normal de fonctionnement, un des pistons du maître-cylindre applique une pression hydraulique à un capteur de pression qui génère un signal électrique transmis à une unité de contrôle électronique de gestion du freinage ;
- dans ce mode normal de fonctionnement, un joint d'étanchéité d'un des pistons du maître-cylindre, après une certaine course de la pédale de frein ferme le circuit d'alimentation de la cartouche de retour d'effort ;
- dans un mode de fonctionnement avec défaillance, l'électrovanne ferme le circuit d'alimentation de la cartouche de retour d'effort, avant que le joint d'étanchéité n'ait fermé ce circuit d'alimentation.

Avantageusement, l'électrovanne est du type fermée au repos.

Dans une réalisation particulière de l'invention, le signal électrique est transmis à une unité de contrôle électronique qui répartit le freinage du véhicule entre une machine électrique fonctionnant en générateur de courant et le groupe hydraulique régulant la pression de freinage sur les freins de roues.

Selon l'invention on met en oeuvre une électrovanne et un joint d'étanchéité pour assurer l'isolation hermétique du simulateur lors du freinage par application de la pression générée par le maître-cylindre aux freins. Lors d'un fonctionnement correct de l'électrovanne, ledit joint d'étanchéité n'est avantageusement pas utilisé.

Ceci obéit à une stratégie opposée à celle habituellement mise en oeuvre dans l'industrie automobile car la panne d'un dispositif qui n'est pas normalement utilisé est difficile à détecter. Toutefois, cette stratégie surprenante permet, selon l'invention, d'éviter l'usure du joint qui donc gardera une efficacité maximale lors d'une éventuelle panne exceptionnelle de l'électrovanne. Une telle usure serait d'autant plus importante, en absence d'électrovanne, que le joint est mobile.

De plus, une panne électrique de l'électrovanne est moins grave dans le cas avantageux d'une électrovanne fermée au repos. Dans le cas d'un premier mode de freinage, l'électrovanne s'ouvre lors de la détection d'un signal de freinage. Dans le cas d'un deuxième mode de freinage, l'électrovanne reste fermée évitant dès le départ toute absorption par le simulateur et par suite améliorant la sensation à la pédale.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma d'un système de freinage pour un véhicule automobile hybride ;
- la figure 2 est une vue en coupe d'une unité de commande de freinage selon l'invention, dans un premier mode de fonctionnement ;
- la figure 3 est une vue en coupe de l'unité de commande de freinage, dans un deuxième mode de fonctionnement ;
- la figure 4 représente des courbes de course et d'effort pour la pédale de frein, dans les deux modes de fonctionnement.

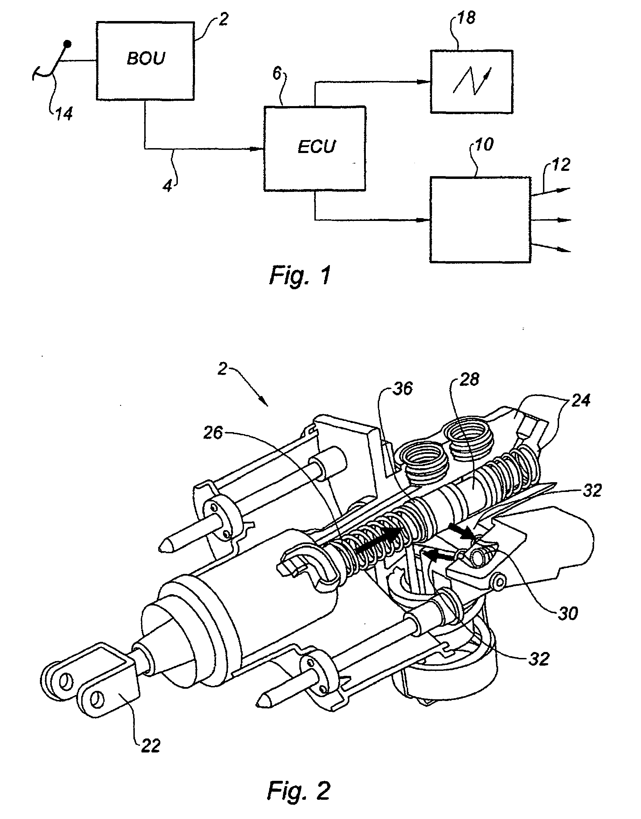

La figure 1 représente schématiquement un système de freinage pour un véhicule automobile hybride, comportant une machine électrique 18 founissant un couple moteur venant en complément de celui délivré par le moteur thermique.

Le système de freinage comprend une unité de commande de freinage BOU ou Brake Operation Unit 2 actionnée par une pédale de frein 14 et qui génère dans un premier mode de fonctionnement, un signal électrique 4 représentant la demande de freinage par le conducteur.

Une unité de contrôle électronique 6 (ECU) reçoit le signal électrique 4 et répartit le freinage suivant les conditions de fonctionnement du véhicule et la demande de freinage du conducteur. Pour un effort léger sur la pédale de frein 14, l'unité de contrôle 6 met en oeuvre la machine électrique 18 utilisée en générateur électrique, pour convertir pendant la décélération du véhicule son énergie cinétique en énergie électrique qui est stockée dans des accumulateurs électriques.

Pour une demande de freinage plus importante correspondant à un effort plus élevé sur la pédale de frein, en plus du fonctionnement de la machine électrique 18 en générateur électrique, l'unité de contrôle électronique 6 commande un groupe hydraulique 10 qui envoie une pression hydraulique 12 aux différents freins de roues.

Le groupe hydraulique 10 peut comporter de plus des fonctions comme un antiblocage des roues ou ABS (Anti-lock Braking System), ou un contrôle de trajectoire ou ESP (Electronic Stability Program), pour assurer la sécurité du véhicule.

On peut de cette manière et à partir de différents paramètres de fonctionnement du véhicule, optimiser le freinage en récupérant un maximum d'énergie, tout en répondant à la demande du conducteur.

La figure 2 représente une unité de commande 2, comportant une tige axiale de commande dont l'extrémité arrière est reliée par une chape 22 à une pédale de frein.

Un maître-cylindre est disposé dans l'axe de la tige de commande et comporte successivement en partant de l'arrière, un premier piston 26 relié à un premier circuit hydraulique alimentant les freins de certaines roues, et un deuxième piston 28 relié à un deuxième circuit hydraulique indépendant du premier, alimentant les freins des autres roues. Ces deux circuits hydrauliques indépendants permettent en cas de fuite de l'un d'eux, de garder un freinage sur les roues de l'autre circuit.

Dans un premier mode de fonctionnement normal, des électrovannes de sortie 24 placées en bout du maître-cylindre, ferment les entrées des deux circuits hydrauliques des freins de roues. La course et/ou la montée en pression générées par le maître-cylindre lors d'un effort sur la pédale de frein, sont détectées par des capteurs qui génèrent le signal électrique 4 représentant la demande de freinage du conducteur.

Le premier piston 26 alimente en fluide lors de sa course utile, par un circuit représenté par les flèches 32, une cartouche hydraulique appliquant à la pédale de frein un retour d'effort qui s'oppose à l'effort appliqué par le conducteur. Une électrovanne 30 de réduction de course est montée dans le circuit d'alimentation 32 pour pouvoir le fermer et est maintenue ouverte dans le mode de fonctionnement normal.

Après une certaine course de la pédale de frein, un joint annulaire 36 du piston primaire vient fermer le circuit d'alimentation 32 de la cartouche de retour d'effort, pour réduire le volume de fluide consommé par cette cartouche et limiter ainsi la course de la pédale de frein.

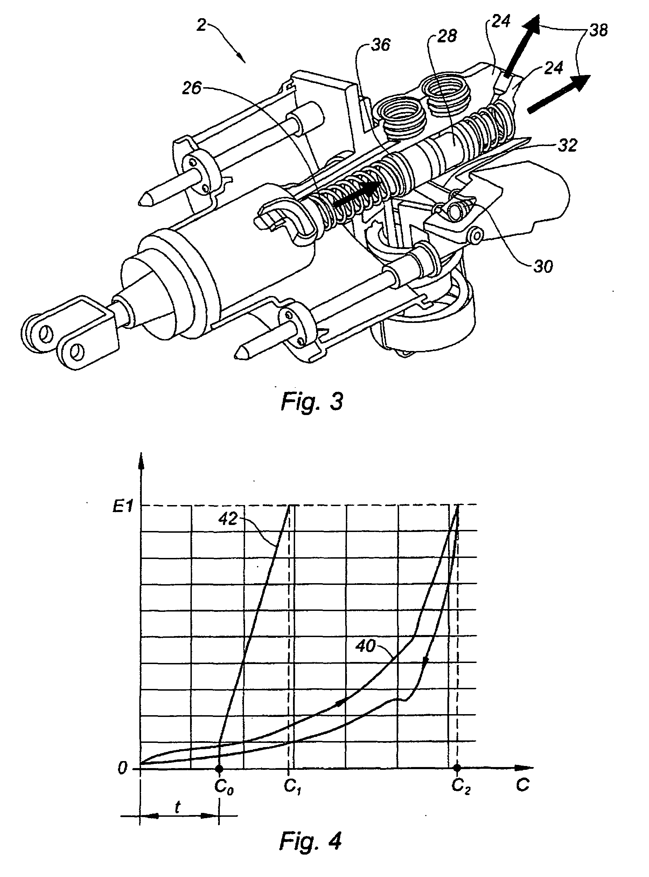

La figure 3 représente l'unité de commande 2 dans un second mode de fonctionnement qui est activé en cas de défaillance du système de freinage, par exemple suite à un défaut de l'alimentation électrique ou à une fuite du circuit hydraulique.

Les électrovannes de sortie 24 sont alors ouvertes, et le maître-cylindre est en communication directe avec les deux circuits hydrauliques des freins de roues, pour leur envoyer une pression représentée par des flèches 38. Le système de freinage fonctionne avec les pressions hydrauliques générées par le maître-cylindre, sans utiliser l'unité de contrôle électronique 6.

Dans ce mode de fonctionnement avec défaillance, l'électrovanne de réduction de course 30 montée dans le circuit d'alimentation 32 de la cartouche de retour d'effort, est maintenue fermée. Ainsi, la cartouche de retour d'effort n'est pas alimentée et ne consomme pas de fluide.

En cas de détection d'une défaillance du système de freinage et de passage dans ce deuxième mode de fonctionnement, l'électrovanne de réduction de course 30 est fermée de manière très rapide dès le début de la course de la pédale de frein 14. Ainsi, dès le début de cette course, la cartouche de retour d'effort n'est pas alimentée, et la course de la pédale de frein 14 est réduite sans attendre que le joint annulaire de fermeture 36 vienne fermer le circuit d'alimentation 32 de cette cartouche.

L'exemple préféré de réalisation d'un joint 36 est décrit dans FR-2834264 A1 qui est incorporé pour référence.

Le graphe de la figure 4 représente en abscisse la course C de la pédale de frein et en ordonnée l'effort E sur cette pédale, pour le deuxième mode de fonctionnement. Une unité de commande 2 sans électrovanne de réduction de course 30, avec seulement le joint annulaire de fermeture 36, fonctionne selon la courbe 40, et la même unité de commande avec l'électrovanne de réduction de course, fonctionne selon la courbe 42.

La courbe 40 montre une montée lente de l'effort E sur environ les trois-quarts de la course, puis une montée rapide de l'effort jusqu'à la valeur E1, sur le dernier quart de cette course jusqu'à la valeur maximum C2. Lors d'un recul de la pédale, l'effort E diminue avec une petite hystérésis.

Quand l'unité 2 comprend une électrovanne de réduction de course 30, la courbe 42 commence à monter comme la courbe 40 jusqu'au point C0 qui se trouve environ au quart de la course maximum C2. La longueur de cette première course correspondant à un temps t, est suffisante pour fermer l'électrovanne de réduction de course 30, après quoi la totalité du volume de fluide déplacé par le maître-cylindre est envoyée dans le circuit hydraulique des freins de roues. On a alors une montée rapide de la courbe d'effort 42, qui se termine au point C1 correspondant à l'effort maximum E1.

La course C1 de la pédale de frein avec l'électrovanne de réduction de course 30, est réduite d'un peu plus de la moitié par rapport à la course C2 sans cette électrovanne. La pédale de frein réagit plus vivement, et le conducteur sent rapidement sous le pied une réaction qui le rassure et lui permet de bien doser son effort.

Il est bien entendu qu'un système de freinage comportant une électrovanne fermée au repos sans joint de fermeture 36 ne sort pas du cadre de la présente invention.

## Revendications

1. Système de freinage pour véhicule automobile, comportant une pédale de frein (14) agissant sur un maître-cylindre d'une unité de commande de freinage (2), qui génère dans un premier mode de fonctionnement un signal électrique (4) transmis à un groupe hydraulique (6) régulant une pression de freinage (12) appliquée à des freins de roues, le maître-cylindre appliquant dans ce premier mode une pression hydraulique à une cartouche qui transmet un retour d'effort à la pédale de frein, le maître-cylindre appliquant dans un deuxième mode de fonctionnement une pression hydraulique aux freins de roues, **caractérisé en ce que** le circuit d'alimentation (32) de la cartouche de retour d'effort comprend une électrovanne (30) qui ferme ce circuit d'alimentation dans le deuxième mode de fonctionnement et **en ce que**, dans un mode normal de fonctionnement, un joint d'étanchéité (36) d'un piston (26) du maître-cylindre ferme le circuit d'alimentation (32) de la cartouche de retour d'effort après une course de la pédale de frein.

2. Système de freinage selon la revendication 1, **caractérisé en ce que** le maître-cylindre comporte deux pistons (26, 28), qui alimentent chacun un circuit hydraulique indépendant de commande des freins de roues.

3. Système de freinage selon la revendication 2, **caractérisé en ce que** des électrovannes (24) sont placées en sortie du maître-cylindre, pour fermer l'alimentation des circuits hydrauliques de commande des freins de roues.

4. Système de freinage selon l'une quelconque des revendications précédentes, **caractérisé en ce que**, dans un mode normal de fonctionnement, un des pistons (26, 28) du maître-cylindre délivre une pression hydraulique à un capteur de pression qui génère un signal électrique (4) transmis à une unité de contrôle électronique (6) de gestion du freinage.

5. Système de freinage selon la revendication 1, **caractérisé en ce que**, dans un mode de fonctionnement avec défaillance, l'électrovanne (30) ferme le circuit d'alimentation (32) de la cartouche de retour d'effort, avant que le joint d'étanchéité (36) n'ait fermé ce circuit d'alimentation.

6. Système de freinage selon l'une quelconque des revendications précédentes, **caractérisé en ce que** le signal électrique (4) est transmis à une unité de contrôle électronique (6) qui répartit le freinage du véhicule entre une machine électrique (18) fonctionnant en générateur de courant, et le groupe hydraulique (6) régulant la pression de freinage (12) sur les freins de roues.

7. Système de freinage selon l'une quelconque des revendications précédentes **caractérisé en ce que** ladite électrovanne (30) qui ferme ledit circuit d'alimentation dans le deuxième mode de fonctionnement est une électrovanne fermée au repos.

## Claims

1. Braking system for a motor vehicle, comprising a brake pedal (14) acting on a master cylinder of a braking controller (2), which, in a first operating mode, generates an electrical signal (4) which is transmitted to a hydraulic unit (6) regulating a braking pressure (12) applied to wheel brakes, the master cylinder applying a hydraulic pressure, in this first mode, to a cartridge which transmits a force feedback to the brake pedal, and the master cylinder applying a hydraulic pressure, in a second operating mode, to the wheel brakes, **characterized in that** the supply circuit (32) of the force feedback cartridge comprises a solenoid valve (30) which closes this supply circuit in the second operating mode, and **in that**, in a normal operating mode, a sealing gasket (36) of a piston (26) of the master cylinder closes the supply circuit (32) of the force feedback cartridge after one stroke of the brake pedal.

2. Braking system according to Claim 1, **characterized in that** the master cylinder has two pistons (26, 28), each of which supplies an independent hydraulic circuit controlling the wheel brakes.

3. Braking system according to Claim 2, **characterized in that** solenoid valves (24) are fitted at the outlet of the master cylinder to close the supply to the hydraulic circuits which control the wheel brakes.

4. Braking system according to any of the preceding claims, **characterized in that**, in a normal operating mode, one of the pistons (26, 28) of the master cylinder delivers a hydraulic pressure to a pressure sensor which generates an electrical signal (4) which is transmitted to an electronic controller (6) which controls the braking.

5. Braking system according to Claim 1, **characterized in that**, in a failure mode of operation, the solenoid valve (30) closes the supply circuit (32) of the force feedback cartridge before the sealing gasket (36) has closed this supply circuit.

6. Braking system according to any of the preceding claims, **characterized in that** the electrical signal (4) is transmitted to an electronic controller (6) which distributes the braking of the vehicle between an electrical machine (18), operating as a current generator, and the hydraulic unit (6) regulating the braking pressure (12) on the wheel brakes.

7. Braking system according to any of the preceding claims, **characterized in that** said solenoid valve (30) which closes said supply circuit in the second operating mode is solenoid valve which is closed when at rest.

## Patentansprüche

1. Bremssystem für ein Kraftfahrzeug, das ein Bremspedal (14) aufweist, welches auf einen Hauptbremszylinder einer Bremssteuereinheit (2) einwirkt, die in einer ersten Betriebsart ein elektrisches Signal (4) erzeugt, das an ein Hydraulikaggregat (6) übertragen wird, welches einen an Radbremsen angewendeten Bremsdruck (12) regelt, wobei der Hauptbremszylinder in dieser ersten Betriebsart einen Hydraulikdruck an eine Patrone anwendet, die eine Kraftrückführung an das Bremspedal überträgt, wobei der Hauptbremszylinder in einer zweiten Betriebsart einen Hydraulikdruck an die Radbremsen anwendet, **dadurch gekennzeichnet, dass** der Versorgungskreis (32) der Kraftrückführungspatrone ein Elektroventil (30) enthält, das diesen Versorgungskreis in der zweiten Betriebsart schließt, und dass in einer normalen Betriebsart eine Dichtung (36) eines Kolbens (26) des Hauptbremszylinders den Versorgungskreis (32) der Kraftrückführungspatrone nach einem Hub des Bremspedals schließt.

2. Bremssystem nach Anspruch 1, **dadurch gekennzeichnet, dass** der Hauptbremszylinder zwei Kolben (26, 28) enthält, die je einen unabhängigen Hydraulikkreis zur Steuerung der Radbremsen versorgen.

3. Bremssystem nach Anspruch 2, **dadurch gekennzeichnet, dass** Elektroventile (24) am Ausgang des Hauptbremszylinders angeordnet sind, um die Versorgung der Hydraulikkreise zur Steuerung der Radbremsen zu schließen.

4. Bremssystem nach einem der vorhergehenden Ansprüche, **dadurch gekennzeichnet, dass** in einer normalen Betriebsart einer der Kolben (26, 28) des Hauptbremszylinders einen Hydraulikdruck an einen Drucksensor liefert, der ein elektrisches Signal (4) erzeugt, das an eine elektronische Kontrolleinheit (6) der Steuerung des Bremsens übertragen wird.

5. Bremssystem nach Anspruch 1, **dadurch gekennzeichnet, dass** in einer Betriebsart mit Störung das Elektroventil (30) den Versorgungskreis (32) der Kraftrückführungspatrone schließt, ehe die Dichtung (36) diesen Versorgungskreis geschlossen hat.

6. Bremssystem nach einem der vorhergehenden Ansprüche, **dadurch gekennzeichnet, dass** das elektrische Signal (4) an eine elektrische Kontrolleinheit (6) übertragen wird, die das Bremsen des Fahrzeugs zwischen einer elektrischen Maschine (18), die als Stromerzeuger arbeitet, und dem Hydraulikaggregat (6) verteilt, das den Bremsdruck (12) auf die Radbremsen regelt.

7. Bremssystem nach einem der vorhergehenden Ansprüche, **dadurch gekennzeichnet, dass** das Elektroventil (30), das in der zweiten Betriebsart den Versorgungskreis schließt, ein im Ruhezustand geschlossenes Elektroventil ist.
